# EUROPEAN PATENT SPECIFICATION

(11) **EP 1 300 428 B1**
(45) Date of publication and mention of the grant of the patent: **14.01.2009**
(21) Application number: 02021669.3
(22) Date of filing: 27.09.2002
(51) Int. Cl.: C08F 220/12, C08J 5/18

(54) **(Meth) acrylic crosslinked fine particles and method of manufacturing the same**
Vernetzte feine (Meth-)Acrylpartikel und Verfahren zu deren Herstellung
Particules fines (meth)acryliques et procédé pour leur préparation

(30) Priority: 28.09.2001 JP 2001304272
(43) Date of publication of application: 09.04.2003
(73) Proprietor: NIPPON SHOKUBAI CO., LTD., Osaka-shi, Osaka 541-0043 (JP)
(72) Inventor: Oishi, Hideki, Himeji-shi, Hyogo 671-2224 (JP); Shimizu, Shuji, Himeji-shi, Hyogo 672-8074 (JP); Inoue, Masafumi, Himeji-shi, Hyogo 671-1242 (JP); Yamamoto, Yasuhiro, Himeji-shi, Hyogo 671-1241 (JP)
(74) Representative: Müller - Hoffmann & Partner

(56) References cited:
- US-A- 5 420 218

## Description

### FIELD OF THE INVENTION

The present invention relates to (meth)acrylic crosslinked fine particles suitably used as, for example, an anti-blocking agent or another additive in food packaging material and a method of manufacturing such particles.

### BACKGROUND OF THE INVENTION

Conventionally, (meth)acrylic polymers are known which have a crosslinking structure and prepared by polymerizing a monomer composition containing a (meth)acrylic monomer. Among them, (meth)acrylic crosslinked fine particles with an average diameter of from about 0.1 µm to about 500 µm are expected to find applications as, for example, an anti-blocking agent for resin film, additives for electrostatic image developing toner, powder paints and water-dispersed paints, additives for decoration boards, additives for artificial marble stone, fillers for cosmetics, chromatographic column filler, optical diffusing agent, and abrasives. Japanese Unexamined Patent Application No. 05-127049/1993 (Tokukaihei 05-127049; published on May 28, 1993) and No. 06-73106/1994 (Tokukaihei 06-73106; published on March 15, 1994) disclose a method of manufacturing such (meth)acrylic crosslinked fine particles which involves suspension polymerization of the aforementioned monomer composition using 2,2'-azobisisobutyronitrile (AIBN).

However, the (meth)acrylic crosslinked fine particles manufactured by the aforementioned conventional method contains decomposition products of AIBN as impurities. The decomposition products are toxic. Although suitably used as an anti-blocking agent or another additives in film not meant for use with food, the crosslinked fine particles are therefore not usable as an anti-blocking agent in food packaging material. Further, as an example, Japanese Unexamined Patent Application No. 01-43504/1989 (Tokukaihei 01-43504; published on February 15, 1989) discloses suspension polymerization of a monomer composition using an organic peroxide. With no aging or other approaches taken to reduce residual monomer, the (meth)acrylic crosslinked fine particles manufactured by the method contain a large amount of (meth)acrylic monomers remaining therein and exhibit poor resistance to heat. The fine particles therefore cannot be used as an anti-blocking agent in food packaging material. In some cases, the film for food-packaging and other purposes needs to be transparent; accordingly, the fine particles as an anti-blocking agent are required to have such physical properties that will not affect the transparency of the film when added to it. Especially, when the (meth)acrylic crosslinked fine particles are used in a film resin as an anti-blocking agent or other purposes, since a thermoplastic resin is typically used as a resin for film, the resin for film is melted with heat to fabricate it into film. Therefore, the (meth)acrylic crosslinked fine particles are exposed to intense heat in, for example, a process to fabricate it into film, etc. as a resin for film. In this round of studies, we have also found that using an aromatic organic peroxide (specifically, a benzoyl peroxide) in a polymerization step in the manufacture of the (meth)acrylic crosslinked fine particles makes it likely that the obtained (meth)acrylic crosslinked fine particles change their color due to heat and affect the film's transparency. Accordingly, hopefully, the fine particles are resistance to heat, or more specifically, shows limited yellowing when exposed to intense heat.

With the foregoing conventional method of manufacture, the obtained (meth)acrylic crosslinked fine particles contain as impurities large amounts of decomposition products of AIBN and cannot used as an anti-blocking agent in food-packaging material. Those (meth)acrylic crosslinked fine particles obtained through use of a polymerization initiator other than AIBN contain large amounts of unreacted (meth)acrylic monomer or exhibit poor resistance to heat, especially easy yellowing at high temperatures; the polymer therefore has a problem that it cannot be suitably used as an anti-blocking agent and other additives in food packaging material. Therefore, no prior art document ever discloses the objects of this invention in a specific manner or provided a viable solution. In addition, the conventional techniques described above cannot manufacture (meth)acrylic crosslinked fine particles which is capable of achieving the objects of the invention.

### SUMMARY OF THE INVENTION

An object of the present invention is to offer (meth)acrylic crosslinked fine particles, with excellent thermal resistance, which are suitably used as, for example, an anti-blocking agent or another resin additive or coating material in food packaging material and a method of manufacturing such particles. Another object is to impart desirable properties to the (meth)acrylic crosslinked fine particles in their manufacture.

To achieve these objects, (meth)acrylic crosslinked fine particles in accordance with the present invention are prepared by polymerizing a monomer composition containing a (meth)acrylic monomer and have an average diameter of from 0.1 µm to 500 µm, and are characterized in that the particles: contain no decomposition products of azo isobutyronitrile; contain a residue of a (meth)acrylic monomer at a concentration not more than 2000 ppm; start thermally decomposing at a temperature not less than 260 °C; and exhibit a Hunter whiteness of at least 85% after being heated at 260 °C for 30 minutes. It is preferred if the (meth)acrylic crosslinked fine particles are prepared by polymerizing a monomer composition containing a (meth)acrylic monomer using at least one polymerization initiator selected from the group consisting of organic peroxides, azo non-cyclic amidine compounds, azo cyclic amidine compounds, azo amide compounds, azo alkyl compounds, and azo ester compounds.

According to the arrangement, the fine particles contain therein a residue of the (meth)acrylic monomer at a concentration not more than 2000 ppm, start thermally decomposing at a temperature not less than 260 °C, and exhibit a Hunter whiteness of at least 85% after being heated at 260 °C for 30 minutes. Specifically, the (meth)acrylic crosslinked fine particles contain less of an unreacted (meth)acrylic monomer and are more resistant to heat and thermal coloring than conventional counterparts. This makes it possible to offer (meth)acrylic crosslinked fine particles suitably used, among other applications, as an anti-blocking agent in food packaging material, such as food packaging film. Since no AIBN as a polymerization initiator is used, no AIBN decomposition products remains in the fine particles. The yellowing of the (meth)acrylic crosslinked fine particles of the present invention due to heat is discussed in terms of Hunter whiteness of the particles after a heating test at 260 °C.

To achieve the objects, a method of manufacturing (meth)acrylic crosslinked fine particles in accordance with the present invention is characterized in that it includes the steps of (1) polymerizing a monomer composition containing a (meth)acrylic monomer using at least one polymerization initiator selected from the group consisting of organic peroxides, azo non-cyclic amidine compounds, azo cyclic amidine compounds, azo amide compounds, azo alkyl compounds, and azo ester compounds, and (2) aging a polymerized product obtained in step (1) at a temperature of from 80 °C to 95 °C for at least 1.5 hours.

According to the arrangement, (meth)acrylic crosslinked fine particles can be readily manufactured which have no impurities, such as toxic decomposition products of AIBN, contain therein a residue of the (meth)acrylic monomer at a concentration not more than 2000 ppm, start thermally decomposing at a temperature not less than 260 °C, and exhibit a Hunter whiteness of at least 85% after being heated at 260 °C for 30 minutes, that is, which contain less of an unreacted (meth)acrylic monomer and are more resistant to heat than conventional counterparts.

For a fuller understanding of the nature and advantages of the invention, reference should be made to the ensuing detailed description taken in conjunction with the accompanying drawings.

### DESCRIPTION OF THE EMBODIMENTS

The following will describe an embodiment in accordance with the present invention. (Meth)acrylic crosslinked fine particles in accordance with the present invention are (meth)acrylic crosslinked fine particles, having a crosslinking structure, prepared by polymerizing a monomer composition containing a (meth)acrylic monomer using at least one polymerization initiator selected from the group consisting of organic peroxides, azo non-cyclic amidine compounds, azo cyclic amidine compounds, azo amide compounds, azo alkyl compounds, and azo ester compounds, and arranged so as to have an average diameter of from 0.1 µm to 500 µm, contain no decomposition products of azo isobutyronitrile, contain a residue of the (meth)acrylic monomer at a concentration not more than 2000 ppm, and start thermally decomposing at a temperature not less than 260 °C. Further, the (meth)acrylic crosslinked fine particles are arranged so as to exhibit a Hunter whiteness of at least 85% after being heated at 260 °C for 30 minutes. Note that in the present invention, the "residue in the particles" is defined as the residue either contained in the particles or carried on their surfaces.

A method of manufacturing (meth)acrylic crosslinked fine particles in accordance with the present invention involves (1) polymerizing a monomer composition containing a (meth)acrylic monomer using at least one of the foregoing polymerization initiators, and (2) aging a polymerized product obtained in the polymerization at a temperature of from 80 °C to 95 °C for at least 1.5 hours. In the present invention, a "monomer composition containing a (meth)acrylic monomer" refers to a monomer composition containing a (meth)acrylic monomer as a major component (not less than 50 wt% and not more than 99.5 wt%).

The monomer composition contains at least a (meth)acrylic monomer and a crosslinking monomer which introduces a crosslinking structure (intermolecular crosslinking structure) to the (meth)acrylic crosslinked fine particles by copolymerizing with the (meth)acrylic monomer.

Specific examples of the (meth)acrylic monomer include acrylates, such as acrylic acids, methyl acrylate, ethyl acrylate, n-propyl acrylate, isopropyl acrylate, n-butyl acrylate, isobutyl acrylate, n-octyl acrylate, dodecyl acrylate, stearyl acrylate, 2-ethylhexyl acrylate, and tetrahydrofurfuryl acrylate; and methacrylates, such as methacrylic acids, methyl methacrylate, ethyl methacrylate, n-propyl methacrylate, isopropyl methacrylate, n-butyl methacrylate, isobutyl methacrylate, n-octyl methacrylate, dodecyl methacrylate, stearyl methacrylate, 2-ethylhexyl methacrylate, and tetrahydrofurfuryl methacrylate. Any one of these (meth)acrylic monomers may be used alone, or alternatively two or more of them may be used together in any combination. Preferred among the listed examples is methyl methacrylate. It is therefore specially preferred if the monomer composition contains methyl methacrylate as a major component (not less than 50 wt% and not more than 99.5 wt%).

The crosslinking monomer only needs to be a monomer which has two or more polymerizable double bonds in each molecule. Specific examples of the crosslinking monomer include (meth)acrylate crosslinking monomers, such as trimethylolpropane triacrylate, allyl methacrylate, ethylene glycol dimethacrylate, diethylene glycol dimethacrylate, triethylene glycol dimethacrylate, decaethylene glycol dimethacrylate, pentadecaethylene glycol dimethacrylate, pentacontahectaethylene glycol dimethacrylate, 1,3-butylene dimethacrylate, trimethylolpropane trimethacrylate, pentaerythritol tetramethacrylate, and diethylene glycol dimethacrylate phthalate; aromatic divinyl compounds, such as divinylbenzene and divinylnaphthalene; derivatives of these aromatic divinyl compound; N,N-divinylaniline; divinyl ether; divinyl sulfide; divinyl sulfonate; polybutadiene; and polyisoprene. Any one of these crosslinking monomers may be used alone, or alternatively two or more of them may be used together in any combination. Preferred among the listed crosslinking monomer examples are (meth)acrylate crosslinking monomers, for these monomers produce (meth)acrylate crosslinked fine particles, imparting their inherent properties to the crosslinked particles: weather and heat resistance. Especially notable here is resistance to thermal yellowing, which is the property under consideration in the invention.

The monomer composition may include non-(meth)acrylic monomers and non-crosslinking monomers that is, such monomers that are copolymerizable with (meth)acrylic monomers, where necessary. Specific examples of such monomers include, but are not limited to, styrenes, such as a styrene, o-methyl styrene, m-methyl styrene, p-methyl styrene, α-methyl styrene, p-methoxystyrene, p-t-butylstyrene, p-phenylstyrene, o-chlorostyrene, m-chlorostyrene, and p-chlorostyrene; ethylene; propylene; butylene; vinyl chloride; vinyl acetate; acrylonitrile; acrylamide; methacrylamide; and N-vinyl-2-pyrrolidone. Two or more of the monomers may be used in any combination where necessary. In order to impart the inherent properties, such as weather and heat resistance, especially thermal yellowing resistance which is the property under consideration in the invention, of (meth)acrylate crosslinking monomers to the (meth)acrylic crosslinked fine particles, (meth)acrylate crosslinking monomers and non-crosslinking monomers account for 0 wt% to 20 wt%, preferably 0 wt% to 10 wt%, and more preferably 0 wt% to 5 wt% of the monomer composition.

The(meth)acrylic monomer(s) preferably accounts for from 50 wt% to 99.5 wt%, more preferably from 60 wt% to 95 wt% of the monomer composition. Accordingly, the crosslinking monomer(s) preferably accounts for from 0.5 wt% to 50 wt%, more preferably from 5 wt% to 40 wt% of the monomer composition. The solubility parameter value (SP value) of the monomer composition is preferably not above 9.0 (cal/cm³)^{1/2}.

In the polymerization of the monomer composition, water is the preferred solvent. In other words, in the method of manufacture in accordance with the present invention, it is preferred if the monomer composition is subjected suspension polymerization. Conventional know-how is applicable to the concentration (content) of the monomer composition in the suspension liquid and the method of preparing the suspension liquid.

In the suspension polymerization of the monomer composition, at least one polymerization initiator selected from the group consisting of organic peroxides, azo non-cyclic amidine compounds, azo cyclic amidine compounds, azo amide compounds, azo alkyl compounds, and azo ester compounds is used.

Specific examples of the organic peroxides include o-chlorobenzoyl peroxide, o-methoxybenzoyl peroxide, lauroyl peroxide, octanoyl peroxide, methyl ethyl keton peroxide, diisopropyl peroxydicarbonate, cumene hydroperoxide, cyclohexanone peroxide, t-butyl hydroperoxide, and diisopropylbenzene hydroperoxide. Any one of these organic peroxides may be used alone, or alternatively two or more of them may be used together in any combination. Preferred among the organic peroxides are those having an aliphatic alkyl structure, but no benzene ring structure (those having a non-cyclic aliphatic alkyl structure). Decomposed products of an organic peroxide with a benzene ring structure, especially, those of a benzoyl peroxide, may in some cases adversely affect the resistance of the (meth)acrylic crosslinked fine particles to thermal yellowing. Therefore, in the present invention, when a benzoyl peroxide is used together with the specific polymerization initiators listed, the benzoyl peroxide preferably accounts for only 0 wt% to 10 wt%, more preferably 0 wt% to 5 wt%, and even more preferably 0 wt% to 1 wt%, of the polymerization initiator used. It is most preferred if no benzoyl peroxide is used at all.

Specific examples of the azo non-cyclic amidine compounds include
2,2'-azobis(2-methyl-N-phenylpropionamidine)dihydrochlori de,
2,2'-azobis[N-(4-chlorophenyl)-2-methylpropionamidine]dih ydrochloride,
2,2'-azobis[N-(4-hydroxyphenyl)-2-methylpropionamidine]di hydrochloride,
2,2'-azobis[2-methyl-N-(phenylmethyl)propionamidine]dihyd rochloride,
2,2'-azobis[2-methyl-N-(2-propenyl)propionamidine]dihydro chloride,
2,2'-azobis(2-methylpropionamidine)dihydrochloride, and 2,2'-azobis[N-(2-hydroxyethyl)-2-methylpropionamidine]dih ydrochloride. Specific examples of the azo cyclic amidine compounds include
2,2'-azobis[2-(5-methyl-2-imidazoline-2-yl)propane]dihydro chloride,
2,2'-azobis[2-(2-imidazoline-2-yl)propane]dihydrochloride,
2,2'-azobis[2-(4,5,6,7-tetrahydro-1H-1,3-diazepin-2-yl)prop ane]dihydrochloride,
2,2'-azobis[2-(3,4,5,6-tetrahydropyrimidine-2-yl)propane]di hydrochloride,
2,2'-azobis[2-(5-hydroxy-3,4,5,6-tetrahydropyrimidine-2-yl) propane] dihydrochloride,
2,2'-azobis{2-[1-(2-hydroxyethyl)-2-imidazoline-2-yl]propan e}dihydrochloride, and
2,2'-azobis[2-(2-imidazoline-2-yl)propane]. Specific examples of the azo amide compounds include
2,2'-azobis{2-methyl-N-[1,1-bis(hydroxymethyl)-2-hydroxyet hyl]propionamide},
2,2'-azobis{2-methyl-N-[1,1-bis(hydroxymethyl)ethyl]propio namide},
2,2'-azobis[2-methyl-N-(2-hydroxyethyl)propionamide], and 2,2'-azobis(2-methylpropionamide)dihydrate. Specific examples of the azo alkyl compounds include 2,2'-azobis(2,4,4-trimethylpentane), and 2,2'-azobis(2-methylpropane). Specific examples of the azo ester compounds include dimethyl-2,2'-azobis(2-methyl propionate). Any one of these azo polymerization initiators may be used alone, or alternatively two or more of them may be used together in any combination. Hence, azo nitrile compounds, such as 2,2'-azobisisobutyronitrile (AIBN), are excluded from the range of the polymerization initiator (azo polymerization initiator) in accordance with the present invention.

The relative amount of the polymerization initiator(s) to the monomer composition is preferably between 0.01 wt% and 20 wt%, and more preferably between 0.1 wt% and 10 wt% per 100 wt % of the monomer composition used. If the relative amount is less than 0.01 wt%, it may take a long time for the polymerization to complete; if greater than 20 wt%, the resultant (meth)acrylic crosslinked fine particles may have a reduced polymerization degree. The polymerization initiator(s) may be added by a conventional method.

In the method of manufacture in accordance with the present invention, it is preferred if a dispersion stabilizer is added to the suspension liquid to stabilize the suspension liquid (reaction liquid) where necessary. Specific examples of the dispersion stabilizer include aqueous macromolecules, such as polyvinyl alcohols, gelatins, tragacanths, starches, methyl celluloses, carboxymethyl celluloses, hydroxyethyl celluloses, sodium polyacrylates, and sodium polymethacrylates; anionic surface active agents; cationic surface active agents; amphoteric surface active agents; non-ionic surface active agents; and alginates, zein, casein, barium sulfate, calcium sulfate, barium carbonate, magnesium carbonate, calcium phosphate, talc, clay, diatom earth, bentonite, titanium hydroxide, and thorium hydroxide. Specific examples of the anionic surface active agents include alkaline metal salts of fatty acid oil, such as sodium oleate and potassium castor oil; ester alkyl sulfates, such as sodium lauryl sulfate and ammonium lauryl sulfate; alkylbenzene sulfonates, such as sodium dodecylbenzene sulfonate; and alkylnaphthalene sulfonate, alkyl sulfonate, dialkyl sulfosuccinate, ester alkyl phosphate, naphthalene sulfonate-formaldehyde condensates, ester polyoxyethylene alkyl phenylether sulfate, ester polyoxyethylene alkyl sulfate. Specific examples of the cationic surface active agents include alkylamine salts, such as laurylamine acetate and stearylamine acetate; and quaternary ammonium salts, such as lauryltrimethyl ammonium chloride. Specific examples of the amphoteric surface active agents include lauryldimethyl amine oxides. Specific examples of the non-ionic surface active agents include polyoxyethylene alkyl ether, polyoxyethylene alkyl phenylether, polyoxyethylene fatty acid ester, sorbitan fatty acid ester, polyoxysorbitan fatty acid ester, polyoxyethylene alkyl amine, glycerine fatty acid ester, oxyethylene-oxypropylene block copolymer. Power of various metal oxides can be used as a dispersion stabilizer. Any one of these dispersion stabilizers may be used alone, or alternatively two or more of them may be used together in any combination where necessary.

The relative amount of the dispersion stabilizer(s) to the monomer composition is preferably between 0.01 wt% and 29 wt%, and more preferably between 0.1 wt% and 10 wt% per the dispersion stabilizer(s) used. The specification of the amount of the dispersion stabilizer(s) used within these ranges causes the obtained (meth)acrylic crosslinked fine particles to have a predetermined diameter: for example, the average diameter will fall in the range of from 0.1 µm to 500 µm, preferably from 0.5 µm to 100 µm, more preferably from 0.5 µm to 30 µm. The dispersion stabilizer(s) may be added by a conventional method.

Moreover, in the method of manufacture in accordance with the present invention, in order to obtain particles with a substantially uniform diameter (with negligible particle size variations) through reduction of fine particle production, more specifically, with an average diameter of from 0.1 µm to 500 µm, it is preferred if a compound ("compound (a)") which is substantially insoluble to water (solubility ≤ 1 wt% at 1012 hPa, 25±5 °C) and poorly soluble to the monomer composition (solubility ≤ 50 wt% under the same conditions) is added to the suspension liquid.

Compound (a) is preferably has at least one functional group or structural unit selected from the group consisting of a -SH group, a -COOH group, a -NO₂ group, a -OH group, and a -S-S- bond. Specific examples of the compound having a -SH group include thiocresol, thiophenol, methyl thioglycolate, ethyl thioglycolate, butyl thioglycolate, 2-ethylhexyl thioglycolate, dithiohydroquinone, xylenedithiol, and 2-mercaptonaphthalene. Specific examples of the compound having a -COOH group include cinamic acid, benzoic acid, chlorobenzoic acid, phthalic acid, and isophthalic acid. Specific examples of the compound having a -NO₂ group include nitrobenzene, nitrotoluene, nitronaphthalene, and nitroaniline. Specific examples of the compound having a -OH group include aminocresol, naphthol, aminonaphthol, m-cresol, oxyanthracene, dioxyanthracene, oxyanthraquinone, dioxyanthraquinone, oxyanthrone, 3-oxy-9-anthrone, oxynaphthoquinone, 1,5-dioxynaphthalene, 1,8-dioxynaphthalene, 2,6-dioxynaphthalene, and 3,5-dimethyl phenol. Specific examples of the compound having a -S-S- bond include diallyldisulfide and dioctylester dithiodipropionate. Specific examples of the compound having two or more of those structural units include salicylic acid, thiosalicylic acid, dithiosalicylic acid, nitrobenzoic acid, 3,4-dinitrobenzoic acid, and nitrophenol. Any one of these compounds (a) may be used alone, or alternatively two or more of them may be used together in any combination where necessary.

The relative amount of compound (a) to the monomer composition is preferably within the range of from 0.0001 wt% to 20 wt%, more preferably from 0.001 wt% to 10 wt%, and even more preferably from 0.01 wt% to 5 wt%. If the ratio of compound (a) added is below 0.0001 wt%, the production of fine particles may become difficult to restrain in some cases; in contrast, if above 20 wt%, the resultant (meth)acrylic crosslinked fine particles may have a reduced polymerization degree. Compound (a) may be added by any method.

The suspension liquid is prepared by adding to water the monomer composition and the polymerization initiator and where necessary, the dispersion stabilizer and/or compound (a). The monomer composition is then polymerized in the suspension liquid to obtain (meth)acrylic crosslinked fine particles. Each (meth)acrylic crosslinked fine particle has a crosslinking structure. The monomer composition, the polymerization initiator, the dispersion stabilizer, and compound (a) may be added to water at any time and in any order. The suspension polymerization is carried out preferably at 10 °C to 90 °C and more preferably at 30 °C to 80 °C. The suspension polymerization is preferably carried out under an inert gas atmosphere such as nitrogen gas. In the suspension polymerization, to prevent the obtained (meth)acrylic crosslinked fine particles from growing too large in size or aggregating together, it is preferred if the mixture is stirred by a method using a device capable of stirring with strong force: for example, a so-called high speed stirrer or homomixer, such as a line mixer. Carrying out the suspension polymerization under these conditions enables particle diameter control and thereby produces the (meth)acrylic crosslinked fine particles with a uniform diameter (with negligible particle size variations).

Additives may be added to the suspension liquid, where necessary, to tailor the (meth)acrylic crosslinked fine particles for particular uses, so long as they do not disturb the polymerization. The additives may be a wide variety of pigments, dye, or other colorants, plasticizers, polymerize stabilizers, fluorescent brighteners, magnetic powder, ultraviolet radiation absorbers, antistatic agents, and fire retardants. Specific examples of the pigments include inorganic pigments, such as white lead, red lead, chrome yellow, carbon black, cobalt blue, zinc oxide, cobalt oxide, titanium dioxide, iron oxide, silica, titanium yellow, and titanium black; and organic pigments, such as isoindolynone, quinacridone, dioxyane violet, phthalocyanine blue, perynone pigments, perylene pigments, insoluble azo pigments, soluble azo pigments, and color lakes. Specific examples of the dye include nitroso dye, nitro dye, azo dye, stilbene azo dye, diphenylmethane dye, triphenylmethane dye, xanthene dye, acridine dye, quinoline dye, methine dye, polymethine dye, thiazol dye, indamine dye, indophenol dye, azine dye, oxazine dye, thiazine dye, and sulfur dye. These additives, where provided in, for example, powder, granule, or similar form, may be subjected to a surface treatment to improve their dispersion properties.

During the course of the polymerization of the monomer composition, it is checked that the polymerization ratio has reached at least 85%. The stirring is continued further while heating, so as to age the polymerized product. The (meth)acrylic crosslinked fine particles with a crosslinking structure in accordance with the present invention are thus obtained. To efficiently reduce the residue of the (meth)acrylic monomer in the later process of aging, the polymerization ratio is preferably at least 85 %. The polymerization ratio here is obtained by sampling the liquid of the polymerized monomer and calculate its solid components. Now, taking the suspension polymerization as a preferred embodiment of the invention, the method of calculating the polymerization ratio is more specifically defined.

The polymerization ratio is calculated in the following manner. Take a 2-gram sample from the suspension liquid and measure its weight. Calculate the weight of the monomer composition in this sample suspension liquid at the time of introduction on the basis of the ratio at which the constituents were introduced. Add a 1-ml polymerization inhibitor solution (acetone solution with an adjusted, 2000-ppm concentration of hyrdoquinone), while cooling down the sample suspension liquid. Then, put the content into an aluminum cup which has been already measured and allow it to dry at 110 °C for 30 minutes. Measure the weight of the remaining solid in the aluminum cup. Finally, calculate, as the polymerization ratio, the ratio of the weight of the remaining solid to the weight of monomer composition at the time of the introduction from these results. The polymerization inhibitor is, for example, methoquinone (commercial name of a product available from Seiko Chemical Co., Ltd.). The aging is necessarily for the purposes of further reducing the amount of the unreacted (meth)acrylic monomer in the (meth)acrylic crosslinked fine particles and further improving the resistance to heat. A suitable aging method is to stir (age) the suspension liquid containing the (meth)acrylic crosslinked fine particles (polymerized product) obtained in the polymerization process of the invention at a temperature of from 80 °C to 95 °C or preferably from 85 °C to 95 °C for at least 1.5 hours. Besides, the aging of the polymerized product is preferably carried out under an inert gas atmosphere, e.g. a nitrogen gas atmosphere. When one of the specific polymerization initiators employed in the invention is used, this aging step is a preferred embodiment to reduce the residual (meth)acrylic monomer component in the obtained (meth)acrylic crosslinked fine particles. It is more preferable if the aging process ages a suspension liquid containing the (meth)acrylic crosslinked fine particles (polymerized product) obtained in the suspension polymerization.

The aging helps the progress of the polymerization, reducing the residual (meth)acrylic monomer in the (meth)acrylic crosslinked fine particles down to 2000 ppm or further (that is, the remaining methyl methacrylate in the fine particles down to 2000 ppm or further if the (meth)acrylic monomer is methyl methacrylate), preferably 1800 ppm or further, more preferably 1500 ppm or further and the remaining crosslinking monomer in the fine particles down to 50 ppm or further. The inert gas atmosphere also enhances the thermal resistance, raising the temperature at which the fine particles start thermally decompose to 260 °C or further up. Incidentally, the crosslinking monomers having multiple polymerizable double bonds in each molecule used in the monomer composition to obtain the (meth)acrylic crosslinked fine particles in accordance with the present invention are not (meth)acrylic monomers defined in relation to the standards for the residual monomer. The crosslinking monomer is highly polymerizable, and its residue can be sufficiently evaluated by using the residual amount of the (meth)acrylic monomer in the (meth)acrylic crosslinked fine particles as an index to show the degree of aging of the (meth)acrylic crosslinked fine particles. In the invention, the residual amount of the crosslinking monomer is defined as a more preferred embodiment. Incidentally, when a monomer which is not, but copolymerizable with, the (meth)acrylic monomer and the crosslinking monomer, is used to manufacture the (meth)acrylic crosslinked fine particles in accordance with the present invention, the residual amount of that monomer is counted as part of the amount of the (meth)acrylic monomer. In addition, the (meth)acrylic crosslinked fine particles obtained by the aging arrangement exhibit excellent resistance to water and oil.

The method of manufacture in accordance with the present invention is capable of rendering the average diameter of the (meth)acrylic crosslinked fine particles from 0.1 µm to 500 µm, preferably from 0.5 µm to 100 µm, and more preferably from 0.5 µm to 30 µm and narrowing the particle size distribution. In such cases where the (meth)acrylic crosslinked fine particles are used as an anti-blocking agent (see later description), the average diameter is preferably from 0.1 µm to 30 µm, more preferably from 0.3 µm to 25 µm, and even more preferably from 0.5 µm to 20 µm.

The above values showing the concentration of the remaining (meth)acrylic monomer in the fine particles are obtained through measurement according to the method specified by the Food and Drug Administration (FDA) of the United States of America. The temperature at which a sample starts thermally decomposing is defined as the temperature, as determined through thermo-gravimetric differential thermal analysis (TG-DTA) in the air, at which the weight of the sample starts decreasing due to thermal decomposition under prescribed conditions. The values of the particles' average diameter are obtained through measurement using a Coulter counter.

The (meth)acrylic crosslinked fine particles are easily separated from the suspension liquid by filtering or a separator, such as a centrifugal separator. Nonetheless, there are no particular limitations as to how the separation should be carried out. Having been separated from the suspension liquid, the (meth)acrylic crosslinked fine particles are now washed and dried as required. There are however no particular limitations as to drying temperature and drying method.

After the drying, the water content of the (meth)acrylic crosslinked fine particles in accordance with the present invention is not more than 10%, preferably not more than 7%, more preferably not more than 5%, and even more preferably not more than 3%. The water content of the (meth)acrylic crosslinked fine particles after the drying is measured based on a weight reduction of the particles before and after the drying.

According to the method, the (meth)acrylic crosslinked fine particles can be readily manufactured which have no impurities, such as toxic decomposition products of 2,2'-azobisisobutyronitrile (AIBN), contain therein a residue of the (meth)acrylic monomer at a concentration not more than 2000 ppm, start thermally decomposing at a temperature not less than 260 °C, and exhibit a Hunter whiteness of at least 85% after being heated at 260 °C for 30 minutes, that is, which contain less of an unreacted (meth)acrylic monomer and are more resistant to heat and thermal coloring than conventional counterparts.

The (meth)acrylic crosslinked fine particles in accordance with the present invention are prepared by polymerizing a monomer composition containing a (meth)acrylic monomer, have an average diameter of from 0.1 µm to 500 µm, contain no decomposition products of azo isobutyronitrile, contain therein a residue of the (meth)acrylic monomer at a concentration not more than 2000 ppm, start thermally decomposing at a temperature not less than 260 °C, and exhibit a Hunter whiteness of at least 85% after being heated at 260 °C for 30 minutes. In other words, the (meth)acrylic crosslinked fine particles contain less of an unreacted (meth)acrylic monomer than conventional counterparts and possesses such thermal resistance to endure fabrication temperatures, etc. of packaging material. Further, the (meth)acrylic crosslinked fine particles in accordance with the present invention has good resistance to thermal coloring. The resistance to thermal coloring, put in more specific terms, refers to such a physical property of the (meth)acrylic crosslinked fine particles in accordance with the present invention that the particles hardly change color when exposed to intense heat in the fabrication of the particles, as added to a resin composition, into wrapping material. These properties are achieved by the (meth)acrylic crosslinked fine particles in accordance with the present invention being obtained through polymerization using a specific polymerization initiator, but no AIBN at all, and sufficiently aged after the polymerization. Therefore, the (meth)acrylic crosslinked fine particles are suitably used, among other purposes, as an anti-blocking agent in food and medicine packaging films or other materials made of a polyolefin, such as polyethylene or polypropylene, or a thermoplastic resin, such as polyethylene terephthalic acid (PET) or polyester. The (meth)acrylic crosslinked fine particles in accordance with the present invention can of course be used as an anti-blocking agent in general-purpose packaging films or other materials. As an anti-blocking agent, the (meth)acrylic crosslinked fine particles are mixed with, for example, a thermoplastic resin at 0.001 wt% to 5 wt%, preferably 0.005 wt% to 3 wt%, and more preferably 0.01 wt% to 2 wt%. There are however no particular limitations as to how much of the (meth)acrylic crosslinked fine particles should be added. In typical situations, it is difficult to add such a small amount of substance in a manufacturing process; an approach is taken here whereby a anti-blocking agent master batch is prepared and mixed with the thermoplastic resin at a predetermined ratio, and the thermoplastic resin composition for film thus obtained is thermally melted so as to fabricate it into film.

Using an aromatic benzoyl peroxide, which is an organic peroxide, as the polymerization initiator and extending the aging time produces such (meth)acrylic crosslinked fine particles that give rise to no problems regarding the amount of the remaining (meth)acrylic monomer in the fine particles, the thermal decomposition starting temperature, etc. However, if a film is manufactured using as an anti-blocking agent the (meth)acrylic crosslinked fine particles obtained through the polymerization using a benzoyl peroxide, the fine particles may color due to exposure to heat in a heating process of the film manufacture and not suitably used where a transparent film is required. Non-transparent film, colored in whatever manner, and designed film have similar coloring problems due to the coloring of the (meth)acrylic crosslinked fine particles added as an anti-blocking agent. The (meth)acrylic crosslinked fine particles obtained through the polymerization using a benzoyl peroxide may be in some cases not fit for the objects of the present invention, because such particles are likely to lack sufficient Hunter whiteness which is a property of the thermal coloring defined in the present invention. When a benzoyl peroxide, which is an organic peroxide, is used in combination with another polymerization initiator, conditions need to be designed, including the restriction on the maximum amount of the benzoyl peroxide used. When a benzoyl peroxide is used in such a combination, decomposition products of the benzoyl peroxide inevitably contaminate the (meth)acrylic crosslinked fine particles, affecting their resistance to thermal coloring in no small measure. In the present invention, embodiments using no benzoyl peroxide are therefore most preferred. Related to the resistance to thermal yellowing of the (meth)acrylic crosslinked fine particles, color changes of the particles are evaluated by measuring Hunter whiteness with a colorimeter after the (meth)acrylic crosslinked fine particles are exposed to the atmosphere at 260 °C for 30 minutes. To measure Hunter whiteness, 8-gram dried powder ((meth)acrylic crosslinked fine particles) is put in an uncolored, transparent, 7 cm by 10cm polyethylene bag (thickness: 0.02 mm) and distributed in the bag to have a substantially uniform thickness, and a colorimeter is used of which the zero reading has been adjusted with respect to a standard white board.

In contrast, using lauroyl peroxide, which is an aliphatic organic peroxide which is a preferred embodiment of the present invention, successfully addresses the aforementioned problem of the presence of decomposition products of AIBN in the (meth)acrylic crosslinked fine particles and the aforementioned problem of the resistance to thermal coloring (yellowing) of benzoyl peroxides. Specifically, the (meth)acrylic crosslinked fine particles in accordance with the present invention have Hunter whiteness, as measured in the above-explained manner, of at least 85%, preferably at least 88%, and show little yellowing.

This demonstrates that the (meth)acrylic crosslinked fine particles in accordance with the present invention contain no AIBN-decomposition products and, for example, when used as an anti-blocking agent, have little effect on the resultant film's transparency. Further, when used a resin additive or an optical diffusing agent, the fine particles hardly turn yellow due to effects of process temperatures.

Hence, the (meth)acrylic crosslinked fine particles in accordance with the present invention is particularly suited for use as, for example, an anti-blocking agent in film. Specific examples of the film include films made of a thermoplastic resin, such as polyethylene, polypropylene, polyvinyl chloride, or polyester. The thermoplastic resin film can be manufactured by using a thermoplastic resin composition containing the (meth)acrylic crosslinked fine particles in accordance with the present invention as an anti-blocking agent in film (anti-blocking agent (ABA) master batch) and thermally melting and molding the film-use thermoplastic resin composition prepared through addition of the anti-blocking agent (ABA) master batch to the thermoplastic resin composition. In the latter process, the master batch is added to the thermoplastic resin composition in such a manner that the (meth)acrylic crosslinked fine particles is added to the thermoplastic resin at a predetermined ratio. The thermal melting mold is, for example, extrusion molding. Further, when the thermoplastic resin is, for example, a polypropylene resin which requires an orientation process among polyolefin resins, a publicly known orientation process will serve the purposes. If extrusion is employed, the thermoplastic resin composition for film may be thermally melt and molded, while controlling the film thickness to 5 µm to 500 µm, preferably 10 µm to 300 µm with a coater or a doctor blade. The anti-blocking agent (ABA) master batch is prepared by adding 1 wt part to 50 wt parts of the (meth)acrylic crosslinked fine particles per 100 wt parts of the thermoplastic resin. The anti-blocking agent (ABA) master batch is added to the thermoplastic resin composition for film so that the (meth)acrylic crosslinked fine particles accounts for 0.001 wt parts to 5 wt parts, preferably 0.005 wt parts to 3 wt parts, more preferably 0.01 wt parts to 2 wt parts of 100 wt parts of the thermoplastic resin composition for film. An application to a polyolefin resin will be specifically described in the following. For example, an oriented polyolefinic resin film can be obtained by stretching a film composition prepared by mixing a polyolefinic resin composition containing the (meth)acrylic crosslinked fine particles as an anti-blocking agent with an anti-blocking agent (ABA) master batch and a polyolefinic resin.

More specifically, the (meth)acrylic crosslinked fine particles in accordance with the present invention is suitably used as an anti-blocking agent in an anti-blocking agent master batch used in an oriented polyolefinic resin film manufactured by stretching in at least the uniaxial direction. The anti-blocking agent master batch is prepared by adding at least 1 wt part to 50 wt parts of the (meth)acrylic crosslinked fine particles per 100 wt parts of the polyolefinic resin composition. Further, the anti-blocking agent master batch is added to the film composition in such a manner that the (meth)acrylic crosslinked fine particles in accordance with the present invention in the film composition account for not less than 0.05 wt parts and not more than 1 wt part per 100 wt parts of the film composition in the oriented polyolefinic resin film. By stretching the film composition in at least the uniaxial direction, an oriented polyolefinic resin film with excellent transparency can be manufactured.

The polyolefinic resin composition is, for example, a homopolymer of propylene, ethylene, butene-1, haxene-1, or 4-methylpentene-1; a copolymer thereof; or a mixture of these polymers. The most preferred among them are polypropylene resins: namely, polypropylene homopolymers; copolymers of propylene and another a-olefin, such as propylene-ethylene copolymer, propylene-ethylene block copolymer, propylene-butene-1 copolymer, and propylene-butene-1 block copolymer; and mixtures thereof.

A polyolefinic polymer additive, such as polyethylene, polybutene, a styrene resin, an ethylene-propylene rubber, or an ethylene-propylene-diene copolymer, be added to the polyolefinic resin composition as necessary.

Particularly preferred among the polypropylene resins are polypropylene resins containing a crystalline propylene copolymer containing as a polyolefinic polymer additive, a 2 wt% or less crystalline propylene homopolymer, ethylene, butene-1, hexene-1, or 4-methylpentene-1.

Further, the (meth)acrylic crosslinked fine particles in accordance with the present invention can be suitably used as a light scattering agent, because the resistance to thermal coloring in a high temperature environment during the course of manufacture may be an important property in the use as a light scattering agent.

Further, the (meth)acrylic crosslinked fine particles in accordance with the present invention can be suitably used as a wide variety of additives: e.g. a lubricant for, for example, magnetic tape and film formed of polyethylene terephthalic acid; a filler in cosmetics; an additive to toner, a decoration board, and artificial marble stone; powder paint or water-dispersed paint; and a chromatographic column filler. The fine particles can also be suitably used as spacers in liquid crystal display panel and carrier media for an immunity diagnosis medicine.

### (Examples)

The following will describe the invention in more detail by means of examples, which is by no means meant to be limiting the present invention. Note that "part" throughout the following examples refers to "wt part."

### [Example 1]

An aqueous solution containing 0.5-part polyoxyethylene alkyl sulfoammonium (commercially available from Dai-ichi Kogyo Seiyaku Co., Ltd. under the name Hitenol N-08) as a dispersion stabilizer dissolved in 600-part deionized water was introduced into a flask equipped at least with a reflow cooler, thermometer, nitrogen feeding pipe, and T. K. Homogenizer (stirrer, made by Tokushu Kika Kogyo Co., Ltd.). Also, a mixture was prepared by mixing (i) a monomer composition containing 75-part methyl methacrylate as a (meth)acrylic monomer and 25-part trimethylolpropane trimethacrylate as a crosslinking monomer, (ii) 1.0-part lauroyl peroxide as a polymerization initiator (organic peroxide), and (iii) 1-part 3,4-dinitrobenzoic acid as compound (a). The mixture was added to the aqueous solution in the flask and the content was strongly stirred at 4000 rpm for 5 minutes to obtain a uniform suspension liquid.

Next, the suspension liquid was heated to 75 °C while blowing nitrogen gas into the flask, and stirred at that temperature for 1 hour to carry out suspension polymerization. A check revealed that the polymerization ratio at this stage was 89%. The liquid was then heated up to 90 °C and further stirred at the temperature for 4 hours so that the polymerized product could age. After completion of the aging, the suspension liquid was cooled, separated by filtering, and dried to obtain (meth)acrylic crosslinked fine particles in accordance with the present invention.

The (meth)acrylic crosslinked fine particles obtained contained therein residual methyl methacrylate at 750 ppm. The (meth)acrylic crosslinked fine particles had thermal decomposition starting temperature of 270 °C and an average diameter of 9.6 µm. There was a residue of the crosslinking monomer below or at 50 ppm. The water content of the (meth)acrylic crosslinked fine particles was 2%.

A mixture of 15 wt parts of the (meth)acrylic crosslinked fine particles and 85 wt parts of a polyethylene resin (MFR = 2.0 g/10 min.; concentration = 0.91 g/cm³) was made and melt-extruded using an extruder, so as to fabricate a master batch. 7.5 wt parts of the polyethylene resin was further added to 1 wt part of the master batch for dilution, and a 500-µm-thick film for analytic use was fabricated at 240 °C using an extruder. The film was immersed in a 10-ml solvent [(methanol):(water) = 95:5] per 1 in² (2.54² cm²) of the surface of the film at 150 °F for 30 minutes and then at 104 °F for 10 days as an elution test.

The amounts of the methyl methacrylate monomer and AIBN decomposition products in the solvent (eluate) were determined by gas chromatography. Results showed that methyl methacrylate monomer was present in the solvent at 100 ppb, but no AIBN decomposition products were detected in terms of a 50-ppb detection threshold. This demonstrates that only an extremely small, acceptable proportion of the film eluted into the solvent.

The (meth)acrylic crosslinked fine particles had Hunter whiteness of 90.5% after being heated at 260 °C for 30 minutes.

### [Example 2]

An aqueous solution containing 1.1-part polyoxyethylene alkyl sulfoammonium (commercially available from Dai-ichi Kogyo Seiyaku Co., Ltd. under the name Hitenol N-08) as a dispersion stabilizer dissolved in 600-part deionized water was introduced into a flask equipped at least with a reflow cooler, thermometer, nitrogen feeding pipe, and T. K. Homogenizer (stirrer, made by Tokushu Kika Kogyo Co., Ltd.). Also, a mixture was prepared by mixing (i) a monomer composition containing 176-part methyl methacrylate as a (meth)acrylic monomer and 44-part triethylene glycol dimethacrylate as a crosslinking monomer, (ii) 2.2-part lauroyl peroxide as a polymerization initiator (organic peroxide), and (iii) 2.2-part thiosalicylic acid as compound (a). The mixture was added to the aqueous solution in the flask and the content was strongly stirred at 4000 rpm for 5 minutes to obtain a uniform suspension liquid.

Next, the suspension liquid was heated to 75 °C while blowing nitrogen gas into the flask, and stirred at that temperature for 1 hour to carry out suspension polymerization. A check revealed that the polymerization ratio at this stage was 91%. The liquid was then heated up to 90 °C and further stirred at the temperature for 4 hours so that the polymerized product could age. After completion of the aging, the suspension liquid was cooled, separated by filtering, and dried to obtain (meth)acrylic crosslinked fine particles in accordance with the present invention.

The (meth)acrylic crosslinked fine particles obtained contained therein residual methyl methacrylate at 860 ppm. The (meth)acrylic crosslinked fine particles had thermal decomposition starting temperature of 268 °C and an average diameter of 10.5 µm. There was a residue of the crosslinking monomer below or at 50 ppm. The water content of the (meth)acrylic crosslinked fine particles was 2.2%.

In the same manner as in example 1, a film was fabricated from the (meth)acrylic crosslinked fine particles obtained in the present example and subjected to an elution test. Results showed that methyl methacrylate was present in the solvent at 150 ppb, but no AIBN decomposition products were detected in terms of a 50-ppb detection threshold. This demonstrates that only an extremely small, acceptable proportion of the film eluted into the solvent.

The (meth)acrylic crosslinked fine particles had Hunter whiteness of 89% after being heated at 260 °C for 30 minutes.

### [Example 3]

Suspension polymerization was carried out in the same manner as in example 1, except that 1.0-part dimethyl 2,2-azobis (2-methyl propionate) was used in place of 1.0-part lauroyl peroxide. A check revealed that the polymerization ratio at this stage was 88%. The suspension liquid was heated up to 90 °C and stirred at the temperature for 6 hours so that the polymerized product could age. After completion of the aging, the suspension liquid was cooled, separated by filtering, and dried to obtain (meth)acrylic crosslinked fine particles in accordance with the present invention.

The (meth)acrylic crosslinked fine particles obtained contained therein residual methyl methacrylate at 1100 ppm. The (meth)acrylic crosslinked fine particles had thermal decomposition starting temperature of 260 °C and an average diameter of 9.9 µm. There was a residue of the crosslinking monomer below or at 50 ppm. The water content of the (meth)acrylic crosslinked fine particles was 2.5%.

In the same manner as in example 1, a film was fabricated from the (meth)acrylic crosslinked fine particles obtained in the present example and subjected to an elution test. Results showed that methyl methacrylate was present in the solvent at 180 ppb, but no AIBN decomposition products were detected in terms of a 50-ppb detection threshold. This demonstrates that only an extremely small, acceptable proportion of the film eluted into the solvent.

The (meth)acrylic crosslinked fine particles had Hunter whiteness of 87% after being heated at 260 °C for 30 minutes.

### [Comparative Example 1]

An aqueous solution containing 0.5-part polyoxyethylene alkyl sulfoammonium (commercially available from Dai-ichi Kogyo Seiyaku Co., Ltd. under the name Hitenol N-08) as a dispersion stabilizer dissolved in 600-part deionized water was introduced into a flask equipped at least with a reflow cooler, thermometer, nitrogen feeding pipe, and T. K. Homogenizer (stirrer, made by Tokushu Kika Kogyo Co., Ltd.). Also, a mixture was prepared by mixing (i) a monomer composition containing 75-part methyl methacrylate as a (meth)acrylic monomer and 25-part trimethylolpropane trimethacrylate as a crosslinking monomer, (ii) 1.5-part benzoyl peroxide as a polymerization initiator (organic peroxide), and (iii) 1-part 3,4-dinitrobenzoic acid as compound (a). The mixture was added to the aqueous solution in the flask and the content was strongly stirred at 4000 rpm for 5 minutes to obtain a uniform suspension liquid.

Next, the suspension liquid was heated to 75 °C while blowing nitrogen gas into the flask, and stirred at that temperature for 1 hour to carry out suspension polymerization. A check revealed that the polymerization ratio at this stage was 88%. The liquid was then heated up to 90 °C and further stirred at the temperature for 4 hours so that the polymerized product could age. After completion of the aging, the suspension liquid was cooled, separated by filtering, and dried to obtain (meth)acrylic crosslinked fine particles in accordance with the present comparative example.

The (meth)acrylic crosslinked fine particles obtained contained therein residual methyl methacrylate at 950 ppm. The (meth)acrylic crosslinked fine particles had a thermal decomposition starting temperature of 270 °C and an average diameter of 9.8 µm.

In the same manner as in example 1, a film was fabricated from the (meth)acrylic crosslinked fine particles obtained in the present comparative example and subjected to an elution test. Results showed that methyl methacrylate was present in the solvent at 100 ppb, but no AIBN decomposition products were detected in terms of a 50-ppb detection threshold. This demonstrates that only an extremely small, acceptable proportion of the film eluted into the solvent.

The (meth)acrylic crosslinked fine particles had Hunter whiteness of 82.5% after being heated at 260 °C for 30 minutes.

### [Comparative Example 2]

(Meth)acrylic crosslinked fine particles were obtained by polymerization under the same conditions as in comparative example 1, except that 1.0-part AIBN was used in place of benzoyl peroxide as a polymerization initiator. A check revealed that the polymerization ratio at this stage was 92%.

The (meth)acrylic crosslinked fine particles obtained contained therein residual methacrylate at 1100 ppm. The (meth)acrylic crosslinked fine particles had thermal decomposition starting temperature of 272 °C and an average diameter of 10.4 µm.

In the same manner as in example 1, a film was fabricated from the (meth)acrylic crosslinked fine particles obtained in the present comparative example and subjected to an elution test. Results showed that methyl methacrylate was present in the solvent at 100 ppm, and AIBN decomposition products at 150 ppm. This detection of AIBN decomposition products demonstrates that the (meth)acrylic crosslinked fine particles of the present comparative example are unsuited as food packaging material.

### [Comparative Example 3]

A suspension liquid was obtained under the same conditions as in examples. The suspension liquid was heated to 75 °C while blowing nitrogen gas into the flask, and stirred at that temperature for 1 hour to carry out suspension polymerization. A check revealed that the polymerization ratio at this stage was 91%. The liquid was then stirred at 75 °C for 4 hours, but without going through an aging process, to obtain (meth)acrylic crosslinked fine particles.

The (meth)acrylic crosslinked fine particles, which had not undergone an aging arrangement, contained residual methyl methacrylate at 6000 ppm and a crosslinking monomer at 250 ppm, had a thermal decomposition starting temperature of 260 °C and an average diameter of 9.7 µm.

In the same manner as in example 1, a film was fabricated from the (meth)acrylic crosslinked fine particles obtained in the present comparative example and subjected to an elution test. Results showed that methyl methacrylate was present in the solvent at 700 ppb, but no AIBN decomposition products were detected in terms of a 50-ppb detection threshold. This detection of AIBN decomposition products demonstrates that the (meth)acrylic crosslinked fine particles of the present comparative example are unsuited as food packaging material because of the large amounts of the eluted substance. The (meth)acrylic crosslinked fine particles obtained in the present example had Hunter whiteness of 87% after being heated at 260 °C for 30 minutes.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

## Claims

1. (Meth)acrylic crosslinked fine particles having a crosslinking structure formed by polymerizing a monomer composition containing a (meth)acrylic monomer, being **characterized in that** said particles:
have an average diameter of from 0.1 µm to 500 µm;
contain no decomposition products of azo isobutyronitrile;
contain a residue of a (meth)acrylic monomer at a concentration not more than 2000 ppm;
start thermally decomposing at a temperature not less than 260 °C; and
exhibit a Hunter whiteness of at least 85% after being heated at 260 °C for 30 minutes.

2. The (meth)acrylic crosslinked fine particles as defined in claim 1, prepared by polymerizing a monomer composition containing a (meth)acrylic monomer using at least one polymerization initiator selected from the group consisting of organic peroxides, azo non-cyclic amidine compounds, azo cyclic amidine compounds, azo amide compounds, azo alkyl compounds, and azo ester compounds.

3. The (meth)acrylic crosslinked fine particles as defined in claim 2, wherein
the monomer composition contains the (meth)acrylic monomer at 50 wt% to 99.5 wt% per 100 wt% of the monomer composition.

4. A method of using (meth)acrylic crosslinked fine particles as defined in any one of claims 1-3 as an anti-blocking agent in a food packaging material.

5. The method as defined in claim 4, wherein
the (meth)acrylic crosslinked fine particles is used as an anti-blocking agent in film by adding 1 wt part to 50 wt parts of the (meth)acrylic crosslinked fine particles to 100 wt parts of a thermoplastic resin composition.

6. The method as defined in claim 5, wherein:
the anti-blocking agent in film is used as a master batch; and
a film-use thermoplastic resin composition prepared by adding a thermoplastic resin composition is fabricated into film by thermal melting and molding to a thickness of 5 µm to 500 µm.

7. A method of manufacturing the (meth)acrylic crosslinked fine particles as defined in claim 1,
said method being **characterized in that** it comprises the steps of:
(i) polymerizing a monomer, composition containing a (meth)acrylic monomer using at least one polymerization initiator selected from the group consisting of organic peroxides, azo non-cyclic amidine compounds, azo cyclic amidine compounds, azo amide compounds, azo alkyl compounds, and azo ester compounds; and
(ii) aging a polymerized product obtained in step (i) at a temperature of from 80 °C to 95 °C for at least 1.5 hours.

8. The method as defined in claim 7, further comprising between steps (i) and (ii) the step of confirming a polymerization ratio.

9. The method as defined in either one of claims 7 and 8, wherein
the polymerization initiator is an organic peroxide with a non-cyclic aliphatic alkyl structure.

10. The method as defined in claim 9, wherein
the polymerization initiator is a lauroyl peroxide.

11. The method as defined in either one of claims 7 and 8, wherein
in step (i), a compound which contains at least one functional group or structural unit selected from the group consisting of a -SH group, a -COOH group, a -NO₂ group, a -OH group, and a -S-S- bond is added.

12. The method as defined in either one of claims 7 and 8, wherein
in step (i), at least one compound which is selected from the group consisting of thiocresol, thiophenol, methyl thioglycolate, ethyl thioglycolate, butyl thioglycolate, 2-ethylhexyl thioglycolate, trimethylolpropane trithioglycolate, dithiohydroquinone, xylenedithiol, 2-mercaptonaphthalene, cinamic acid, benzoic acid, chlorobenzoic acid, phthalic acid, isophthalic acid, nitrobenzene, nitrotoluene, nitronaphthalene, nitroaniline, aminocresol, naphthol, aminonaphthol, m-cresol, oxyanthracene, dioxyanthracene, oxyanthraquinone, dioxyanthraquinone, oxyanthrone, 3-oxy-9-anthrone, oxynaphthoquinone, 1,5-dioxynaphthalene, 1,8-dioxynaphthalene, 2,6-dioxynaphthalene, 3,5-dimethyl phenol, diallyldisulfide, dioctylester dithiodipropionate, salicylic acid, thiosalicylic acid, dithiosalicylic acid, nitrobenzoic acid, 3,4-dinitrobenzoic acid, and nitrophenol is added.

13. A film composition, prepared by mixing a thermoplastic resin composition and the (meth)acrylic crosslinked fine particles as defined in claim 1, said film being
**characterized in that**
1 wt part to 50 wt parts of the (meth)acrylic crosslinked fine particles are mixed per 100 wt parts of the thermoplastic resin composition.

14. The film composition as defined in claim 13, wherein
the thermoplastic resin composition is a polyolefinic resin composition.

## Patentansprüche

1. Vernetzte feine (Meth-)Acrylsäurepartikel mit einer vernetzten Struktur, gebildet durch Polymerisieren einer Monomerzusammensetzung, enthaltend ein (Meth-)Acrylsäuremonomer, **dadurch gekennzeichnet, dass** die Partikel:
einen durchschnittlichen Durchmesser von 0,1 µm bis 500 µm aufweisen; keine Zersetzungsprodukte von Azoisobutyronitril enthalten;
einen Rest eines (Meth-)Acrylsäuremonomers mit einer Konzentration von nicht mehr als 2000 ppm enthalten;
die thermische Zersetzung bei einer Temperatur von nicht weniger als 260°C beginnen; und
nach Erhitzen bei 260°C für 30 Minuten einen Hunter-Weißgrad von mindestens 85% zeigen.

2. Vernetzte feine (Meth-)Acrylsäurepartikel wie definiert nach Anspruch 1, hergestellt durch Polymerisieren einer Monomerzusammensetzung, enthaltend ein (Meth-)Acrylsäuremonomer unter Verwendung mindestens eines Polymerisationsinitiators, ausgewählt aus der Gruppe, bestehend aus organischen Peroxiden, nicht-cyclischen Azoamidinverbindungen, cyclischen Azoamidinverbindungen, Azoamidverbindungen, Azoalkylverbindungen und Azoesterverbindungen.

3. Vernetzte feine (Meth-)Acrylsäurepartikel wie definiert nach Anspruch 2,
wobei
die Monomerzusammensetzung das (Meth-)Acrylsäuremonomer mit 50 bis 99,5 Gew.-% pro 100 Gew.-% der Monomerzusammensetzung enthält.

4. Verfahren zur Verwendung der vernetzten und feinen (Meth-)Acrylsäure-partikel wie definiert nach irgendeinem der Ansprüche 1 bis 3 als ein Antiblockierungsmittel in einem Nahrungsmittelverpackungsmaterial.

5. Verfahren wie definiert nach Anspruch 4, wobei
die vernetzten feinen (Meth-)Acrylsäurepartikel als ein Antiblockierungsmittel in einem Film unter Zugabe von 1 Gew.-Teil bis 50 Gew.-Teilen der vernetzten feinen (Meth-)Acrylsäurepartikel auf 100 Gew.-Teile einer thermoplastischen Harzzusammensetzung verwendet werden.

6. Verfahren wie definiert nach Anspruch 5, wobei:
das Antiblockierungsmittel im Film als Hauptmenge verwendet wird und eine als Film zu verwendende thermoplastische Harzzusammensetzung, hergestellt unter Zugabe einer thermoplastischen Harzzusammensetzung, als Film hergestellt wird, indem auf eine Dicke von 5 bis 500 µm thermisch geschmolzen und geformt wird.

7. Verfahren zur Herstellung der vernetzten feinen (Meth-)Acrylsäurepartikel wie definiert in Anspruch 1,
wobei das Verfahren **dadurch gekennzeichnet ist, dass** es die Schritte aufweist:
(i) Polymerisieren einer Monomerzusammensetzung, enthaltend ein (Meth-)Acrylsäuremonomer unter Verwendung mindestens eines Polymerisationsinitiators, ausgewählt aus der Gruppe, bestehend aus organischen Peroxiden, nicht-cyclischen Azoamidinverbindungen, cyclischen Azoamidinverbindungen, Azoamidverbindungen, Azoalkylverbindungen und Azoesterverbindungen und
(ii) Altern lassen eines polymerisierten Produkts, erhalten in Schritt (i), bei einer Temperatur von 80 bis 95°C für mindestens 1,5 Stunden.

8. Verfahren wie definiert in Anspruch 7, weiterhin umfassend zwischen Schritt (i) und (ii) den Schritt des Bestätigens des Polymerisationsverhältnisses.

9. Verfahren wie definiert nach einem der Ansprüche 7 oder 8, wobei
der Polymerisationsinitiator ein organisches Peroxid mit einer nicht-cyclischen aliphatischen Alkylstruktur darstellt.

10. Verfahren wie definiert in Anspruch 9, wobei
der Polymerisationsinitiator ein Lauroylperoxid darstellt.

11. Verfahren wie definiert nach einem der Ansprüche 7 oder 8, wobei
in Schritt (i) eine Verbindung, die mindestens eine funktionelle Gruppe oder strukturelle Einheit enthält, ausgewählt aus der Gruppe, bestehend aus einer -SH-Gruppe, einer -COOH-Gruppe, einer -NO₂-Gruppe, einer -OH-Gruppe und einer -S-S-Bindung, zugegeben wird.

12. Verfahren wie definiert nach einem der Ansprüche 7 oder 8, wobei
in Schritt (i) mindestens eine Verbindung zugegeben wird, die ausgewählt ist aus der Gruppe, bestehend aus Thiokresol, Thiophenol, Methylthioglycolat, Ethylthioglykolat, Butylthioglykolat, 2-Ethylhexylthioglykolat, Trimethylolpropantrithioglykolat, Dithiohydrochinon, Xyloldithiol, 2-Mercaptonaphthalin, Zimtsäure, Benzoesäure, Chlorbenzoesäure, Phthalsäure, Isophthalsäure, Nitrobenzol, Nitrotoluol, Nitronaphthalin, Nitroanilin, Aminokresol, Naphthol, Aminonaphthol, m-Kresol, Oxyanthracen, Dioxyanthracen, Oxyanthrachinon, Dioxyanthrachinon, Oxyanthron, 3-Oxy-9-anthron, Oxynaphthochinon, 1,5-Dioxynaphthalin, 1,8-Dioxynaphthalin, 2,6-Dioxynaphthalin, 3,5-Dimethylphenol, Diallyldisulfid, Dioctylester, Dithiodipropionat, Salicylsäure, Thiosalicylsäure, Dithiosalicylsäure, Nitrobenzoesäure, 3,4-Dinitrobenzoesäure und Nitrophenol.

13. Filmzusammensetzung, hergestellt durch Mischen einer thermoplastischen Harzzusammensetzung und den vernetzten feinen (Meth-)Acrylsäurepartikeln wie definiert nach Anspruch 1, wobei der Film **dadurch gekennzeichnet ist, dass**
1 Gew.-Teil bis 50 Gew.-Teile der vernetzten feinen (Meth-)Acrylsäurepartikel pro 100 Gew.-Teile der thermoplastischen Harzzusammensetzung gemischt werden.

14. Filmzusammensetzung wie definiert nach Anspruch 13, wobei
die thermoplastische Harzzusammensetzung eine polyolefinische Harzzusammensetzung darstellt.

## Revendications

1. Fines particules (méth)acryliques réticulées ayant une structure réticulée formée par polymérisation d'une composition de monomère contenant un monomère (méth)acrylique, **caractérisées en ce qu'**elles :
ont un diamètre moyen de 0,1 µm à 500 µm
ne contiennent pas de produits de décomposition de l'azobisisobutyronitrile ;
contiennent un résidu d'un monomère (méth)acrylique à une concentration pas supérieure à 2000 ppm ;
commencent à se décomposer thermiquement à une température non inférieure à 260°C ; et
possèdent une blancheur de Hunter d'au moins 85% après avoir été chauffées à 260°C pendant 30 minutes.

2. Fines particules (méth)acryliques réticulées telles que définies dans la revendication 1, préparées par polymérisation d'une composition de monomère contenant un monomère (méth)acrylique en utilisant au moins un initiateur de polymérisation choisi dans le groupe constitué par les peroxydes organiques, les composés azo amidines non cycliques, les composés azo amidines cycliques, les composés azo amides, les composés azo alkyle, et les composés azo esters.

3. Fines particules (méth)acryliques réticulées telles que définies dans la revendication 2, dans lesquelles
la composition de monomère contient le monomère (méth) acrylique à raison de 50% en poids à 99,5% en poids pour 100% en poids de la composition de monomère.

4. Procédé d'utilisation de fines particules (méth)acryliques réticulées telles que définies dans l'une quelconque des revendications 1-3 en tant qu'agent anti-bloquant dans un matériau d'emballage alimentaire.

5. Procédé tel que défini dans la revendication 4, dans lequel
les fines particules (méth)acryliques réticulées sont utilisées en tant qu'agent anti-bloquant dans un film par addition d'une partie en poids à 50 parties en poids des fines particules (méth)acryliques réticulées à 100 parties en poids d'une composition de résine thermoplastique.

6. Procédé tel que défini dans la revendication 5, dans lequel
l'agent anti-bloquant du film est utilisé en tant que mélange mère ; et
une composition de résine thermoplastique pour utilisation en tant que film, préparée en ajoutant une composition de résine thermoplastique est transformée en film par fusion thermique et moulage à une épaisseur de 5 µm à 500 µm.

7. Procédé de fabrication de fines particules (méth)acryliques réticulées telles que définies dans la revendication 1,
ledit procédé étant **caractérisé en ce qu'**il comprend les étapes de :
(i) polymérisation d'une composition de monomère contenant un monomère (méth)acrylique en utilisant au moins un initiateur de polymérisation choisi dans le groupe constitué par les peroxydes organiques, les composés azo amidines non cycliques, les composés azo amidines cycliques, les composés azo amides, les composés azo alkyle, et les composés azo esters ; et
(ii) vieillissement du produit polymérisé obtenu dans l'étape (i) à une température de 80°C à 95°C pendant au moins 1,5 heure.

8. Procédé tel que défini dans la revendication 7, comprenant encore entre les étapes (i) et (ii) l'étape de confirmation du rapport de polymérisation.

9. Procédé tel que défini dans l'une quelconque des revendications 7 et 8, dans lequel
l'initiateur de polymérisation est un peroxyde organique avec une structure alkyle aliphatique non cyclique.

10. Procédé tel que défini dans la revendication 9, dans lequel
l'initiateur de polymérisation est un peroxyde de lauroyle.

11. Procédé tel que défini dans l'une quelconque des revendications 7 et 8, dans lequel
dans l'étape (i), un composé qui contient au moins un groupe fonctionnel ou unité structurale, choisi dans le groupe constitué par un groupe -SH, un groupe -COOH, un groupe -NO₂, un groupe -OH, et une liaison -S-S-, est ajouté.

12. Procédé tel que défini dans l'une quelconque des revendications 7 et 8, dans lequel
dans l'étape (i), au moins un composé est ajouté, lequel est choisi dans le groupe constitué par le thiocrésol, le thiophénol, le thioglycolate de méthyle, le thioglycolate d'éthyle, le thioglycolate de butyle, le thioglycolate de 2-éthylhexyle, le trithioglycolate de triméthylolpropane, la dithiohydroquinone, le xylènedithiol, le 2-mercaptonaphtalène, l'acide cinamique, l'acide benzoique, l'acide chlorobenzoïque, l'acide phtalique, l'acide isophtalique, le nitrobenzène, le nitrotoluène, le nitronaphtalène, la nitroaniline, l'aminocrésol, le naphtol, l'aminonaphtol, le m-crésol, l'oxyanthracène, le dioxyanthracène, l'oxyanthraquinone, la dioxyanthraquinone, l'oxyanthrone, la 3-oxy-9-anthrone, l'oxynaphtoquinone, le 1,5-dioxynaphtalène, le 1,8-dioxynaphtalène, le 2,6-dioxynaphtalène, le 3,5-diméthylphénol, le disulfure de diallyle, l'ester dithiodipropionate de dioctyle, l'acide salicylique, l'acide thiosalicylique, l'acide dithiosalicylique, l'acide nitrobenzoïque, l'acide 3,4-dinitrobenzoïque, et le nitrophénol.

13. Composition de film, préparée en mélangeant une composition de résine thermoplastique et les fines particules (méth)acryliques réticulées telles que définies dans la revendication 1, ledit film étant **caractérisé en ce**
**que** 1 partie en poids à 50 parties en poids des fines particules (méth)acryliques réticulées sont mélangées pour 100 parties en poids de la composition de résine thermoplastique.

14. Composition de film telle que définie dans la revendication 13, dans laquelle
la composition de résine thermoplastique est une composition de résine polyoléfinique.
